# EUROPEAN PATENT APPLICATION

(11) **EP 3 537 646 A1**
(43) Date of publication of application: **11.09.2019**
(21) Application number: 17867697.9
(22) Date of filing: 01.11.2017
(51) Int. Cl.: H04L 5/00

(54) **METHOD FOR FEEDING BACK ACKNOWLEDGEMENT INFORMATION SUBJECTED TO UNLICENSED TRANSMISSION, BASE STATION AND USER EQUIPMENT**

(30) Priority: 03.11.2016 CN 201610972391
(71) Applicant: Sharp Kabushiki Kaisha, Sakai City, Osaka 590-8522 (JP); FG Innovation Company Limited, Tuen Mun, New Territories, Hong Kong (CN)
(72) Inventor: LIU, Renmao, Shanghai 201206 (CN); ZHANG, Chongming, Shanghai 201206 (CN)
(74) Representative: Müller-Boré & Partner Patentanwälte PartG mbB
(86) International application number: PCT/CN2017/108908
(87) International publication number: WO 2018/082561

(57) **Abstract**

Provided in the present application are a method for feeding back acknowledgement/negative acknowledgement (ACK/NACK) information subjected to unlicensed uplink transmission, an associated base station, and a user equipment. The base station of an embodiment of the present disclosure comprises: a configuration unit suitable for configuring an uplink transmission resource pool for unlicensed uplink data transmission and configuring a downlink feedback resource for bearing downlink feedback information corresponding to the uplink transmission resource pool; and a transmission unit suitable for transmitting configuration information, wherein the configuration information indicates the uplink transmission resource pool and the downlink feedback resource.

## Description

### Technical Field

The present application relates to the field of wireless communications technologies. More specifically, the present application relates to a method for feeding back acknowledgement/negative acknowledgement (ACK/NACK) information for unlicensed uplink transmission, an associated base station, and associated user equipment.

### Background

A new research project on 5G technical standards (see non-patent literature: RP-160671: New SID Proposal: Study on New Radio Access Technology) was proposed by NTT DOCOMO in the 3rd Generation Partnership Project (3GPP) RAN#71 plenary meeting held in March 2016, and was approved. The goal of the research project is to develop a New Radio (NR) access technology to meet all of the application scenarios, requirements, and deployment environments of 5G. NR mainly has three application scenarios: enhanced mobile broadband communications (eMBB), massive machine type communication (mMTC), and ultra reliable and low latency communications (URLLC). According to the planning of the research project, the standardization of NR is conducted in two stages: the first-stage standardization will be completed by the middle of 2018; the second-stage standardization will be completed by the end of 2019. The first-stage standard specifications need to be forward-compatible with the second-stage standard specifications, while the second-stage standard specifications need to be established on the basis of the first-stage standard specifications and to meet all requirements of 5G NR technical standards.

It has been agreed in the 3GPP RAN1#86 meeting held in Goteborg in August 2016 that NR should be committed to supporting unlicensed uplink transmission at least for mMTC. It has also been agreed that at least the following two types of unlicensed uplink transmission are supported: 1. UE randomly selects an uplink transmission resource; and 2. an uplink transmission resource of UE is configured or determined in advance by an evolved base station (eNB, evolved NodeB).

The unlicensed uplink transmission refers to that the UE randomly selects an uplink transmission resource or directly sends uplink data using a resource preconfigured by the eNB without requiring scheduling of the eNB. The UE does not even need to perform a random access process. Such transmission is generally applicable to transmission of uplink small data. That is, once the UE has uplink data to send, and the data packet is smaller than a specific threshold, the UE will directly select an uplink resource to send the uplink data without the need to request scheduling of the eNB.

A main application scenario of unlicensed uplink transmission is mMTC. Similar to the existing enhanced machine type communication (eMTC: enhanced MTC) and Narrowband-Internet of Thing (NB-IoT), mMTC also needs to support a coverage enhancement function to expand the application range of mMTC devices.

For unlicensed uplink transmission, how to identify users of uplink data transmission, how to solve contention between the users, how to implement a hybrid automatic repeat request (HARQ), and the like are problems that the standardization faces and needs to solve.

### Summary of Invention

The main objective of the present application is to solve feedback of HARQ acknowledgement/negative acknowledgement (ACK/NACK) information when mMTC adopts unlicensed uplink transmission.

According to a first aspect of the present disclosure, a base station is provided. The base station comprises: a configuration unit, adapted to configure an uplink transmission resource pool for unlicensed uplink data transmission, and configure a downlink feedback resource for carrying downlink feedback information corresponding to the uplink transmission resource pool; and a transmission unit, adapted to send configuration information, the configuration information indicating the uplink transmission resource pool and the downlink feedback resource.

In some embodiments, the downlink feedback resource refers to a downlink frequency domain resource. Alternatively, in some other embodiments, the downlink feedback resource refers to a time domain resource. Alternatively, in some further embodiments, the downlink feedback resource refers to a time domain resource. Alternatively, in some further embodiments, the downlink feedback resource refers to a code domain resource. Alternatively, in some further embodiments, the downlink feedback resource refers to a spatial domain resource.

In some embodiments, the base station configures different uplink transmission resource pools for user equipment of different coverage enhancement levels. Alternatively, in some other embodiments, the base station configures the same uplink transmission resource pool for user equipment of different coverage enhancement levels. Alternatively, in some further embodiments, the base station configures one uplink transmission resource pool for user equipment of some different coverage enhancement levels, and configures another different uplink transmission resource pool for user equipment of some or all of the remaining different coverage enhancement levels.

In some embodiments, the base station configures different downlink feedback resources for different uplink transmission resource pools. Alternatively, in some other embodiments, the base station configures the same downlink feedback resource for different uplink transmission resource pools. Alternatively, in some further embodiments, the base station configures one downlink feedback resource for some different uplink transmission resource pools, and configures another different downlink feedback resource for some or all of the remaining uplink transmission resource pools.

In some embodiments, the base station further comprises a receiving unit. The receiving unit is adapted to receive unlicensed uplink transmission from user equipment according to the configured uplink transmission resource pool. Moreover, the transmission unit is further adapted to send downlink feedback information for the unlicensed uplink transmission using the configured downlink feedback resource.

In some embodiments, the downlink feedback information is expressed for a single resource in the uplink transmission resource pool.

In some embodiments, the base station provides feedback information for each resource in the uplink transmission resource pool, and a position of the feedback information corresponding to each resource in a data packet carrying the feedback information has a predetermined mapping to a number of the resource.

Alternatively, in some other embodiments, the base station provides feedback information only for a resource in the uplink transmission resource pool that correctly receives uplink data, and indicates a correspondence between the feedback information and the resource in the uplink data transmission resource pool by comprising a number of the resource in a data packet carrying the feedback information.

In some embodiments, downlink feedback information for user equipment having the same coverage enhancement level is fed back in the same physical downlink channel, and the physical downlink channel is sent multiple times repeatedly or sent one time.

In some embodiments, the downlink feedback information may be carried by one of the following: control information on a physical downlink control channel; a media access control (MAC) message on a physical downlink shared channel; and RRC information on a physical downlink shared channel.

According to a second aspect of the present disclosure, a method performed by a base station is provided. The method comprises: configuring an uplink transmission resource pool for unlicensed uplink data transmission, and configuring a downlink feedback resource for carrying downlink feedback information corresponding to the uplink transmission resource pool; and transmitting configuration information, the configuration information indicating the uplink transmission resource pool and the downlink feedback resource.

According to a third aspect of the present disclosure, user equipment (UE) is provided. The UE comprises: a receiving unit, adapted to receive configuration information from a base station; and a processing unit, adapted to extract, from the configuration information, an uplink transmission resource pool configured for unlicensed uplink data transmission and a downlink feedback resource configured for carrying downlink feedback information corresponding to the uplink transmission resource pool.

Optionally, the UE may further comprise a transmission unit. The transmission unit is adapted to perform uplink data transmission using a resource in the configured uplink transmission resource pool. Moreover, the receiving unit is further adapted to receive downlink feedback information from the base station for the uplink data transmission. The transmission unit is further adapted to perform uplink data retransmission according to the received downlink feedback information.

Optionally, the UE may further comprise a measurement unit. The measurement unit is adapted to perform reference signal received power (RSRP) measurement. Moreover, the transmission unit is further adapted to: select an appropriate uplink transmission resource pool from the configured uplink transmission resource pools according to a measured RSRP value; and select a resource from the appropriate uplink transmission resource pool for performing uplink data transmission.

According to a fourth aspect of the present disclosure, a method performed by UE is provided. The method comprises: receiving configuration information from a base station; and extracting, from the configuration information, an uplink transmission resource pool configured for unlicensed uplink data transmission and a downlink feedback resource configured for carrying downlink feedback information corresponding to the uplink transmission resource pool.

### Brief Description of Drawings

The above and other features of the present application will become more apparent through the following detailed description made in conjunction with the accompanying drawings, where:
FIG. 1 is a block diagram of a base station according to an embodiment of the present disclosure.
FIG. 2 is a block diagram of user equipment according to an embodiment of the present disclosure.
FIG. 3 is a flowchart of a method for unlicensed transmission according to an embodiment of the present disclosure.
FIG. 4 is a flowchart of another method for unlicensed transmission according to another embodiment of the present disclosure.
FIG. 5 is a schematic diagram illustrating a mode of transmitting downlink feedback information for a resource pool by a base station according to an embodiment of the present invention.
FIG. 6 is a schematic diagram illustrating another mode of transmitting downlink feedback information for a resource pool by a base station according to an embodiment of the present invention.

In the accompanying drawings, same reference numerals indicate same or similar elements.

### Detailed Description of Embodiments

The following describes the present application in detail with reference to the accompanying drawings and specific embodiments. It should be noted that the present application should not be limited to the specific embodiments described below. In addition, for simplicity, detailed description of the known art not directly related to the present application is omitted to prevent confusion in understanding the present application.

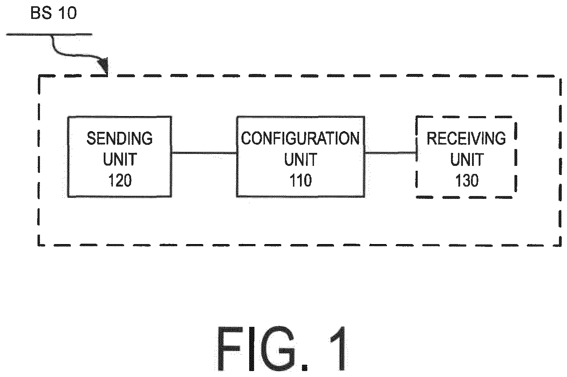

FIG. 1 is a block diagram of a base station (BS) 10 according to an embodiment of the present application. As shown in the figure, the BS 10 includes a configuration unit 110 and a transmission unit 120. Optionally, the BS 10 may further include a receiving unit. Those skilled in the art should understand that the BS 10 may further include other functional units needed for implementing its functions, such as various processors, memories, RF signal processing units, baseband signal processing units, and other physical downlink channel transmission processing units. However, for simplicity, detailed description of these well-known elements is omitted.

The configuration unit 110 is adapted to configure a resource pool (hereinafter referred to as an uplink transmission resource pool) for unlicensed uplink data transmission, and adapted to configure a resource (hereinafter referred to as a downlink feedback resource) for carrying downlink feedback information corresponding to the uplink transmission resource pool. The downlink feedback information may include, for example, HARQ acknowledgement/negative acknowledgement (ACK/NACK) information for uplink data transmission.

The transmission unit 120 is adapted to send configuration information, the configuration information indicating the resource pool configured by the configuration unit 110 for unlicensed uplink data transmission and the corresponding downlink feedback resource.

The receiving unit 130 is adapted to receive unlicensed uplink transmission from user equipment according to the uplink transmission resource pool configured by the configuration unit 110.

The transmission unit 120 is further adapted to send downlink feedback information for the unlicensed uplink data transmission, for example, ACK or NACK information for the data transmission and/or indication information indicating a relevant user identity (UE ID) or uplink transmission resource, using the downlink feedback resource configured by the configuration unit 110.

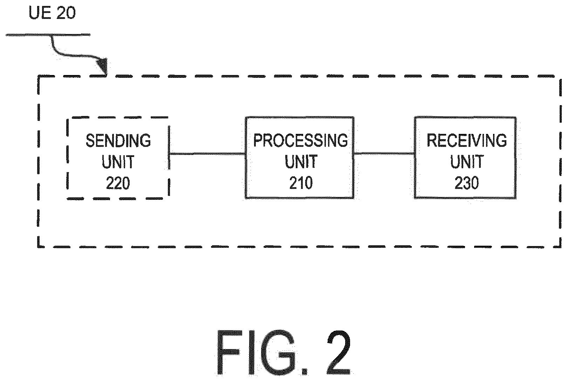

FIG. 2 is a block diagram of user equipment (UE) 20 according to an embodiment of the present application. As shown in the figure, the UE 20 includes a processing unit 210 and a receiving unit 230. Optionally, the UE 20 may further include a transmission unit 220. Those skilled in the art should understand that the UE 20 may further include other functional units needed for implementing its functions, such as various processors, memories, RF signal processing units, baseband signal processing units, and other physical uplink channel transmission processing units. However, for simplicity, detailed description of these well-known elements is omitted.

The receiving unit 230 is adapted to receive configuration information from a base station.

The processing unit 210 is adapted to analyze the received configuration information to extract a resource pool (namely, an uplink transmission resource pool) configured by the base station for unlicensed uplink data transmission and a resource (namely, a downlink feedback resource) configured for carrying downlink feedback information corresponding to the uplink transmission resource pool.

The transmission unit 220 is adapted to perform uplink data transmission using a resource in the configured uplink transmission resource pool. The receiving unit 230 is further adapted to receive downlink feedback information from the base station for the uplink data transmission. Thereby, the transmission unit 220 can perform uplink data retransmission according to the received downlink feedback information.

The uplink transmission resources in the present disclosure refer to resources for transmitting physical signaling or physical channels that carry uplink preamble signals and/or uplink control signaling and/or uplink data.

The uplink transmission resources in the present disclosure may refer to, for example, uplink multiple access resources. One uplink multiple access resource consists of one multiple access physical resource and one multiple access signature. One multiple access physical resource consists of one time-frequency block. One multiple access signature includes at least one of the following eight items:
1. Codebook/codeword
2. Sequence
3. Interleaving and/or mapping pattern
4. Demodulation reference signaling
5. Preamble signal
6. Spatial-dimension
7. Power-dimension
8. Not excluding other possibilities

A corresponding uplink transmission resource pool may be referred to as an uplink multiple access resource pool, and a corresponding uplink resource pool group may be referred to as an uplink multiple access resource pool group.

Alternatively, the uplink transmission resources in the present disclosure may also consist of frequency domain resources and/or time domain resources and/or spatial domain resources and/or code domain resources. A corresponding uplink transmission resource pool may be referred to as a resource pool consisting of uplink frequency domain resources and/or time domain resources and/or spatial domain resources and/or code domain resources.

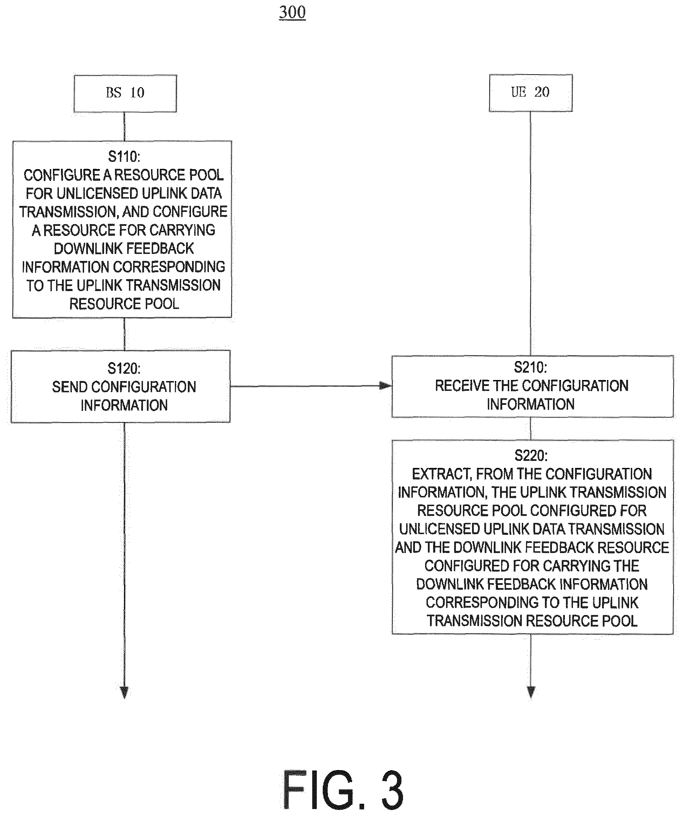

FIG. 3 is a flowchart of a method 300 for unlicensed transmission according to an embodiment of the present disclosure.

As shown in the figure, in step S110, a base station (for example, the BS 10) configures an uplink transmission resource pool for unlicensed uplink data transmission, and configures a downlink feedback resource for carrying downlink feedback information corresponding to the uplink transmission resource pool.

It should be understood that the downlink feedback resource may refer to a downlink frequency domain resource. Or, the downlink feedback resource may refer to a time domain resource. Or, the downlink feedback resource may refer to a time-frequency resource. The present invention is not limited in this regard.

### Configuration of uplink transmission resource pool

The uplink transmission resource pool for unlicensed uplink transmission may be a contention based resource pool, or may be a contention free resource pool. The contention based resource pool is used for UE to randomly select, from the resource pool, an uplink transmission resource for transmitting uplink data of the UE. The contention free resource pool is used for the base station to pre-configure, from the resource pool and for the UE, an uplink resource for transmitting uplink data by the UE.

Preferably, the base station may consider different coverage enhancement levels when configuring the uplink transmission resource pool for unlicensed uplink transmission. As an example, the base station may configure different uplink transmission resource pools for user equipment of different coverage enhancement levels. Alternatively, the base station may configure the same uplink transmission resource pool for user equipment of different coverage enhancement levels. Alternatively, the base station may configure one uplink transmission resource pool for user equipment of some different coverage enhancement levels, and configure another different uplink transmission resource pool for user equipment of some or all of the remaining different coverage enhancement levels.

For example, consider the existence of N (N is a positive integer greater than or equal to 2) different coverage enhancement levels. In the first situation, the base station may configure N uplink transmission resource pools for the N different coverage enhancement levels, each uplink transmission resource pool for user equipment of one coverage enhancement level. In the second situation, the base station may configure only the same one uplink transmission resource pool for the N different coverage enhancement levels. The uplink transmission resource pool will be used for user equipment of all coverage enhancement levels. When N is a positive integer greater than or equal to 3, the following third situation may also exist. In the third situation, the base station may configure one uplink transmission resource pool for user equipment of some different coverage enhancement levels (for example, the first and second coverage enhancement levels), and configure another different uplink transmission resource pool for user equipment of the remaining coverage enhancement levels (for example, the third to Nth coverage enhancement levels).

### Configuration of downlink feedback resource

The base station may configure different downlink feedback resources for different uplink transmission resource pools. Alternatively, the base station may configure the same downlink feedback resource for different uplink transmission resource pools. Alternatively, the base station may also configure one downlink feedback resource for some different uplink transmission resource pools, and configure another different downlink feedback resource for some or all of the remaining uplink transmission resource pools.

For example, consider the existence of M (M is a positive integer greater than or equal to 2) uplink transmission resource pools. In the first situation, the base station may configure M downlink feedback resources, each downlink feedback resource for carrying feedback information for one of the M uplink transmission resource pools. For example, one downlink feedback information data packet may be designed that will carry feedback information for all resources in one uplink transmission resource pool. Alternatively, in the second situation, the base station may configure the same downlink feedback resource for different uplink transmission resource pools. For example, one downlink feedback information data packet may be designed that will carry feedback information for all resources in the M uplink transmission resource pools. Alternatively, when M is a positive integer greater than or equal to 3, the following third situation may also exist. In the third situation, the base station configures one downlink feedback resource for some uplink transmission resource pools, and configure another different downlink feedback resource for some or all of the remaining uplink transmission resource pools. For example, one downlink feedback information data packet may be designed that will carry feedback information for all resources in the first and second uplink transmission resource pools; meanwhile, another downlink feedback information data packet may be designed that will carry feedback information for all resources in the third to Mth uplink transmission resource pools.

In step S120, the base station sends configuration information. The configuration information indicates the configured uplink transmission resource pool and the configured downlink feedback resource.

In step S210, user equipment (for example, the UE 20) receives the configuration information from the base station.

In step S220, the user equipment extracts, from the received configuration information, the uplink transmission resource pool configured by the base station for unlicensed uplink data transmission and the downlink feedback resource configured by the base station for carrying the downlink feedback information corresponding to the uplink transmission resource pool.

The method 300 focuses on resource configuration. After the resource configuration is completed, the base station and the user equipment can start unlicensed transmission.

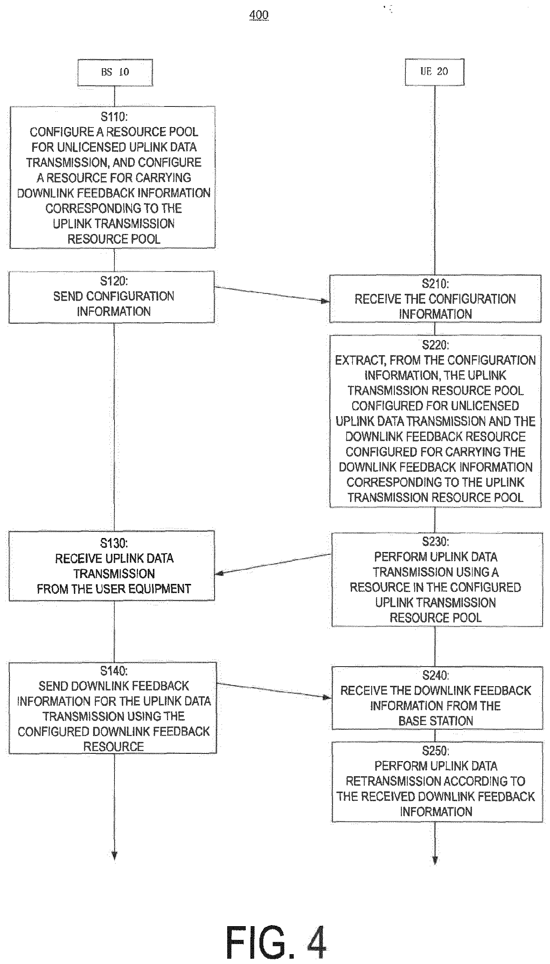

FIG. 4 is a flowchart of another method 400 for unlicensed transmission according to another embodiment of the present disclosure.

As shown in the figure, the beginning steps S110 to S220 of the method 400 are the same as those of the method 300. The configuration of the uplink transmission resource pool and the corresponding downlink feedback resource between the base station and the user equipment will be completed through steps S110, S120, S210, and S220. The method 400 then proceeds to step S230.

In step S230, the user equipment performs unlicensed uplink data transmission using a resource in the configured uplink transmission resource pool.

As described earlier, the uplink transmission resource pool for unlicensed uplink transmission may be a contention based resource pool, or may be a contention free resource pool. The contention based resource pool is used for UE to randomly select, from the resource pool, an uplink transmission resource for transmitting uplink data of the UE. The contention free resource pool is used for the base station to pre-configure, from the resource pool and for the UE, an uplink resource for transmitting uplink data by the UE.

Preferably, if different coverage enhancement levels are considered during configuration of the uplink transmission resource pool for unlicensed uplink data transmission, for example, different uplink transmission resource pools are configured for user equipment of different coverage enhancement levels, step S230 may include the following substeps: the user equipment performs reference signal received power (RSRP) measurement; and afterwards, selects an appropriate uplink transmission resource pool from the configured uplink transmission resource pools according to a measured RSRP value, and then selects a resource from the appropriate uplink transmission resource pool for performing uplink data transmission.

In step S130, the base station receives unlicensed uplink data transmission from the user equipment. The base station may perform reception of uplink data according to the configured uplink transmission resource pool. For example, the base station may blindly detect uplink data of the UE on all resources in the uplink transmission resource pool that is configured by the base station.

In step S140, the base station sends downlink feedback information for the unlicensed uplink data transmission using the configured downlink feedback resource.

The downlink feedback information is expressed for a single resource in the uplink transmission resource pool. For example, the downlink feedback information may include acknowledgement/negative acknowledgement (ACK/NACK) information for unlicensed uplink transmission on a single resource, respectively.

In some embodiments, the base station may provide feedback information for each resource in the uplink transmission resource pool, and a position of the feedback information corresponding to each resource in a data packet carrying the feedback information has a predetermined mapping to a number of the resource.

Alternatively, in some other embodiments, the base station provides feedback information only for a resource in the uplink transmission resource pool that correctly receives uplink data, and indicates a correspondence between the feedback information and the resource in the uplink data transmission resource pool by including a number of the resource in a data packet carrying the feedback information.

The downlink feedback information may be carried by one of the following: control information on a physical downlink control channel; a media access control (MAC) message on a physical downlink shared channel; and RRC information on a physical downlink shared channel.

Preferably, downlink feedback information for user equipment having the same coverage enhancement level will be fed back in the same physical downlink channel (for example, the same data packet). The data packet carrying the feedback information may be sent multiple times repeatedly or sent one time.

In step S240, the user equipment receives the downlink feedback information from the base station for the uplink data transmission.

Then, in step S250, the user equipment performs uplink data retransmission according to the received downlink feedback information,

Then, the method 400 ends.

### Unlicensed uplink data transmission

In the method 400, several schemes may exist for the user equipment to perform unlicensed uplink data transmission. Two specific implementation schemes are described below as an example.

### Scheme 1

The UE sends only user data on an uplink.

As described earlier, the uplink transmission resource pool for unlicensed uplink transmission may be a contention based resource pool, or may be a contention free resource pool. The contention based resource pool is used for UE to randomly select, from the resource pool, an uplink transmission resource for transmitting uplink data of the UE. The contention free resource pool is used for the base station to pre-configure, from the resource pool and for the UE, an uplink resource for transmitting uplink data by the UE. The base station may divide the uplink transmission resource pool into multiple resource pools based on coverage enhancement levels of UE. For example, the base station categorizes served UE into different coverage enhancement levels according to reference signal received power (RSRP) of the UE, and configures different uplink transmission resource pools for the UE of different coverage enhancement levels. Alternatively, the base station may configure the same uplink transmission resource pool for UE of different coverage enhancement levels; or configure the same uplink transmission resource pool for UE of some different coverage enhancement levels, and configure another same uplink transmission resource pool for some or all of the remaining different coverage enhancement levels.

The UE selects, according to an RSRP value measured by the UE, a contention based resource pool of a coverage enhancement level corresponding to the RSRP value, and randomly selects a resource from the selected resource pool for transmitting uplink data. The base station blindly detects uplink data of the UE on all resources in all contention based resource pools that are configured by the base station. If user data is detected on a specific resource, the base station records a number of the resource (including a resource pool number and a resource number in the resource pool; or only the resource number), and feeds back ACK information on a corresponding downlink feedback resource. NACK information is fed back on a downlink feedback resource corresponding to an uplink transmission resource on which no user data is detected.

### Scheme 2

The UE sends a group of information on an uplink.

The group of information includes preamble signals and user data. A one-to-one mapping exists between the preamble signals and the user data. In this case, the uplink resource pool includes a preamble signal resource pool and an uplink user data resource pool. A one-to-one mapping exists between resources in the preamble signal resource pool and resources in the user data resource pool. The UE randomly selects a preamble signal in the preamble signal resource pool, that is, correspondingly selects a resource in a specific user data resource pool.

The preamble signals and the user data may be sent in the same transmission timing interval (TTI). Alternatively, the preamble signals and the user data may be sent in different TTIs. In this case, a clear correspondence needs to exist between the preamble signals and the user data in the time domain (and/or frequency domain and/or spatial domain and/or code domain). That is, a corresponding uplink resource for transmitting user data can be known from the selection of a preamble signal.

Alternatively, the group of information includes preamble signals, uplink control signaling, and user data. A one-to-one mapping exists between the preamble signals, the uplink control signaling, and the user data. The uplink control signaling and the user data may be sent on the same physical channel, or may be sent on different physical channels. At this time, the uplink resource pool includes a preamble signal resource pool, an uplink control channel resource pool, and a user data resource pool; or the uplink resource pool includes a preamble signal resource pool and an uplink control signaling and user data resource pool. A one-to-one mapping exists between resources in the preamble signal resource pool, resources in the uplink control signaling resource pool, and resources in the user data resource pool; or a one-to-one mapping exists between resources in the preamble signal resource pool and resources in the uplink control signaling and user data resource pool. The UE randomly selects a preamble signal in the preamble signal resource pool, that is, correspondingly selects a resource in a specific user data resource pool and/or a resource in a specific control signaling resource pool.

The preamble signals, the uplink control signaling, and the user data may be sent in the same transmission timing interval (TTI). Alternatively, the preamble signals, the uplink control signaling, and the user data may be sent in different transmission timing intervals. In this case, a clear correspondence needs to exist between the preamble signals, the uplink control signaling, and the user data in the time domain (and/or frequency domain and/or spatial domain and/or code domain). That is, a corresponding uplink resource for transmitting user data and/or uplink resource for transmitting uplink control signaling can be known from the selection of a preamble signal.

The main purpose of the UE transmitting a group of information on the uplink is to realize transmission of uplink data of the UE, while the preamble signals and/or uplink control signaling serve the UE transmitting the uplink data. In this case, multiple resource pools (the preamble signal resource pool, the uplink user data resource pool, and/or the uplink control signaling resource pool) required for transmitting uplink data of specific UE may be referred to as a resource pool group, and a group of resources in the resource pool group to be used for transmitting uplink data of specific UE is referred to as a resource group. The uplink transmission resource pool (or resource pool group) for unlicensed uplink transmission may be a contention based resource pool (or resource pool group), or may be a contention free resource pool (or resource pool group). The contention based resource pool (or resource pool group) is used for UE to randomly select, from the resource pool (or resource pool group), an uplink transmission resource (or resource group) for transmitting uplink information of the UE. The contention free resource pool (or resource pool group) is used for the base station to pre-configure, from the resource pool (or resource pool group) and for the UE, an uplink resource (or resource group) for transmitting uplink data by the UE. The base station may divide the uplink transmission resource pool (or resource pool group) into multiple resource pools (or resource pool groups) based on coverage enhancement levels of UE. For example, the base station categorizes served UE into different coverage enhancement levels according to reference signal received power (RSRP) of the UE, and configures different uplink transmission resource pools (or resource pool groups) for the UE of different coverage enhancement levels. Alternatively, the base station may configure the same uplink transmission resource pool (or resource pool group) for UE of different coverage enhancement levels; or configure the same uplink transmission resource pool (or resource pool group) for some different coverage enhancement levels, and configure another same uplink transmission resource pool (or resource pool group) for some or all of the remaining different coverage enhancement levels.

The UE selects, according to an RSRP value measured by the UE, a contention based resource pool (or resource pool group) of a coverage enhancement level corresponding to the RSRP value, and randomly selects a resource (or resource group) from the selected resource pool (or resource pool group) for transmitting uplink information (preamble signals, uplink data, and/or uplink control signaling). The base station blindly detects uplink information (preamble signals, uplink data, and/or uplink control signaling) of the UE on all resources (or resource groups) in all contention based resource pools (or resource pool groups) that are configured by the base station. If all uplink information (preamble signals, uplink data, and/or uplink control signaling) sent by the user is detected on a specific resource group, the base station records a number of the resource group (including a resource pool group number and a resource group number in the resource pool group; or only the resource group number), and feeds back ACK information on a corresponding downlink feedback resource; if preamble signals sent by the user are detected on a preamble signal resource in a specific resource group, while user data sent on an uplink data resource in the resource group is not detected, and/or uplink control signaling sent on an uplink control signaling resource in the resource group is not detected, a NACK is fed back on a corresponding downlink feedback resource; if preamble signals sent by the user are not detected on a preamble signal resource in a specific resource group, discontinuous transmission (DTX) is fed back on a corresponding downlink feedback resource. Alternatively, when preamble signals and user data are sent on an uplink, the base station combines Preamble Signal Detected or Not and User Data Detected or Not into four states shown in Table 1. The base station may choose to feed back all the four states or one or two or three states of the four states. If all the four states need to be fed back, downlink feedback corresponding to a specific uplink resource group needs to be represented by two bits. For example, 00 represents State 0, 01 represents State 1, 10 represents State 2, and 11 represents State 3.

**Table 1 (Note: "1" represents Signal or Data Detected, and "0" represents Signal or Data Not Detected)**

| State | Preamble Signal Detected or Not | User Data Detected or Not |
|---|---|---|
| 0 | 0 | 0 |
| 1 | 0 | 1 |
| 2 | 1 | 0 |
| 3 | 1 | 1 |

Alternatively, when preamble signals, uplink control signaling, and user data are sent on an uplink, the base station combines Preamble Signal Detected or Not, Uplink Control Signaling Detected or Not, and User Data Detected or Not into eight states shown in Table 2. The base station may select to feed back all the eight states or one or more of the eight states. If all the eight states need to be fed back, downlink feedback corresponding to a specific uplink resource group needs to be represented by three bits. For example, 000 represents State 0, 001 represents State 1, 010 represents State 2, 011 represents State 3, 100 represents State 4, 101 represents State 5, 110 represents State 6, and 111 represents State 7.

**Table 2 (Note: "1" represents Signal, Signaling, or Data Detected, and "0" represents Signal, Signaling, or Data Not Detected)**

| State | Preamble Signal Detected or Not | Uplink Control Signaling Detected or Not | User Data Detected or Not |
|---|---|---|---|
| 0 | 0 | 0 | 0 |
| 1 | 0 | 0 | 1 |
| 2 | 0 | 1 | 0 |
| 3 | 0 | 1 | 1 |
| 4 | 1 | 0 | 0 |
| 5 | 1 | 0 | 1 |
| 6 | 1 | 1 | 0 |
| 7 | 1 | 1 | 1 |

### Downlink feedback information for unlicensed uplink data transmission

In accordance with the different schemes for the user equipment to perform unlicensed uplink data transmission, several different schemes also exist for the base station to send downlink feedback information for the unlicensed uplink data transmission in the method 400. Specific description is given below.

After transmitting uplink data, UE adopting unlicensed uplink transmission will receive, on a downlink, feedback information sent from the base station for a result of reception of the uplink data of the UE. The base station may send feedback information for multiple pieces of UE in a centralized manner on the same physical downlink channel. The physical channel may be a physical downlink control channel, or may be a physical downlink shared channel, or a physical downlink channel defined in the NR standards for carrying control signaling and/or data. A physical downlink channel resource (frequency domain resource and/or time domain resource and/or code domain resource and/or spatial domain resource) is, for example, a band width and/or a frequency position, a subframe set or a time slot set or other defined time length metric. Alternatively, the frequency resource may be a physical resource block (PRB) or a physical resource block group (PRBG) or a frequency domain physical resource defined in the narrowband or NR standards, and may be configured based on the uplink transmission resource pool (or resource pool group) for transmitting uplink data of the UE as described above. The base station may configure, for different uplink transmission resource pools (or resource pool groups), different physical downlink channel resources (frequency domain resources and/or time domain resources and/or code domain resources and/or spatial domain resources) for carrying feedback information sent by the base station for results of reception of the uplink data of the UE, for example, band widths and/or frequency positions, subframe sets or time slot sets or other defined time length metrics. Alternatively, the frequency resource may be a physical resource block (PRB) or a physical resource block group (PRBG) or a frequency domain physical resource defined in the narrowband or NR standards. Alternatively, the base station may configure, for different uplink transmission resource pools (or resource pool groups), the same physical downlink channel resource (frequency domain resource and/or time domain resource and/or code domain resource and/or spatial domain resource) for carrying feedback information sent by the base station for results of reception of the uplink data of the UE, for example, a band width and/or a frequency position, a subframe set or a time slot set or other defined time length metric. Alternatively, the frequency resource may be a physical resource block (PRB) or a physical resource block group (PRBG) or a frequency domain physical resource defined in the narrowband or NR standards. Or, for some different uplink transmission resource pools (or resource pool groups), the same physical downlink channel resource (frequency domain resource and/or time domain resource and/or code domain resource and/or spatial domain resource) for carrying feedback information sent by the base station for results of reception of the uplink data of the UE, for example, a band width and/or a frequency position, a subframe set or a time slot set or other defined time length metric, is configured. Alternatively, the frequency resource may be a physical resource block (PRB) or a physical resource block group (PRBG) or a frequency domain physical resource defined in the narrowband or NR standards. Moreover, for some or all of the remaining different uplink transmission resource pools (or resource pool groups), another same physical downlink channel resource (frequency domain resource and/or time domain resource and/or code domain resource and/or spatial domain resource) for carrying feedback information sent by the base station for results of reception of the uplink data of the UE, for example, a band width and/or a frequency position, a subframe set or a time slot set or other defined time length metric, is configured. Alternatively, the frequency resource may be a physical resource block (PRB) or a physical resource block group (PRBG) or a frequency domain physical resource defined in the narrowband or NR standards.

For UE transmitting uplink data using resources (or resource groups) in the same uplink resource pool (or resource pool group), feedback information from the base station for results of reception of the uplink data will be fed back in the same physical downlink channel. The UE receives, according to the resource pool (or resource pool group) used by the UE for transmitting the uplink data, feedback information from the base station for the results of reception of the uplink data of the UE on the corresponding physical downlink channel. Alternatively, for UE transmitting uplink data using resources (or resource groups) in different uplink resource pools (or resource pool groups), feedback information from the base station for results of reception of the uplink data may be fed back in the same physical downlink channel. The UE receives, according to the resource pool (or resource pool group) used by the UE for transmitting the uplink data, feedback information from the base station for the results of reception of the uplink data of the UE on the corresponding physical downlink channel. A correspondence between an uplink resource pool (or resource pool group) and a physical downlink channel resource may be configured by dedicated or common radio resource control (RRC) signaling.

Alternatively, the physical downlink channel resource (frequency domain resource and/or time domain resource and/or code domain resource and/or spatial domain resource) is, for example, a band width and/or a frequency position, a subframe set or a time slot set or other defined time length metric. Alternatively, the frequency resource may be a physical resource block (PRB) or a physical resource block group (PRBG) or a frequency domain physical resource defined in the narrowband or NR standards, and may be configured based on coverage enhancement levels of UE. The base station categorizes served UE into different coverage enhancement levels according to reference signal received power (RSRP) of the UE, and configures, for the UE of different coverage enhancement levels, different physical downlink channel resources (frequency domain resources and/or time domain resources and/or code domain resource and/or spatial domain resources), for example, band widths and/or frequency positions, subframe sets or time slot sets or other defined time length metrics. Alternatively, the frequency resource may be a physical resource block (PRB) or a physical resource block group (PRBG) or a frequency domain physical resource defined in the narrowband or NR standards, and used for carrying feedback information sent by the base station for results of reception of uplink data of the UE. Alternatively, the base station may configure, for UE of different coverage enhancement levels, the same physical downlink channel resource (frequency domain resource and/or time domain resource and/or code domain resource and/or spatial domain resource) for carrying feedback information sent by the base station for results of reception of uplink data of the UE, for example, a band width and/or a frequency position, a subframe set or a time slot set or other defined time length metric. Alternatively, the frequency resource may be a physical resource block (PRB) or a physical resource block group (PRBG) or a frequency domain physical resource defined in the narrowband or NR standards. Or, for UE of some different coverage enhancement levels, the same physical downlink channel resource (frequency domain resource and/or time domain resource and/or code domain resource and/or spatial domain resource) for carrying feedback information sent by the base station for results of reception of uplink data of the UE, for example, a band width and/or a frequency position, a subframe set or a time slot set or other defined time length metric, is configured. Alternatively, the frequency resource may be a physical resource block (PRB) or a physical resource block group (PRBG) or a frequency domain physical resource defined in the narrowband or NR standards. Moreover, for UE of some or all of the remaining different coverage enhancement levels, another same physical downlink channel resource (frequency domain resource and/or time domain resource and/or code domain resource and/or spatial domain resource) for carrying feedback information sent by the base station for results of reception of uplink data of the UE, for example, a band width and/or a frequency position, a subframe set or a time slot set or other defined time length metric, is configured. Alternatively, the frequency resource may be a physical resource block (PRB) or a physical resource block group (PRBG) or a frequency domain physical resource defined in the narrowband or NR standards.

For UE having the same coverage enhancement level, feedback information from the base station for results of reception of uplink data will be fed back in the same physical downlink channel. The UE receives, according to the coverage enhancement level, feedback information from the base station for the results of reception of the uplink data of the UE on the corresponding physical downlink channel.

### Specific implementation of physical downlink channel carrying downlink feedback information

Feedback information may be identified and indicated based on a resource (resource group) in an uplink resource pool (or resource pool group), or may be identified based on a UE identity (ID: Identification). That is, a specific resource (or resource group) in the uplink resource pool (or resource pool group) will have its corresponding feedback information in a physical channel for downlink feedback thereof, or a specific UE ID will have its corresponding feedback information in a physical channel for downlink feedback thereof.

In the situation that the UE sends only user data on an uplink, downlink feedback information for the UE may include an ACK and a NACK. That is, if the base station correctly receives the uplink data of the UE, an ACK is fed back; if the uplink data of the UE is not received or is received incorrectly, a NACK is fed back.

In the situation that the UE sends preamble signals and user data on an uplink, downlink feedback information for the UE may include the four states (or one or more of the four states) in Table 1 above.

In the situation that the UE sends preamble signals, uplink control signaling, and user data on an uplink, downlink feedback information for the UE may include the eight states (or one or more of the eight states) in Table 2 above.

Two modes for indicating a correspondence between feedback information in a physical downlink channel and a resource (or resource group) in an uplink resource pool (or resource pool group) or indicating a correspondence between feedback information in a physical downlink channel and a UE ID are provided below as an example.

### Mode 1

The base station provides feedback information for each resource in the uplink transmission resource pool, and a position of the feedback information corresponding to each resource in a data packet carrying the feedback information has a predetermined mapping to a number of the resource. In other words, all resources (or resource groups) in a specific resource pool (or resource pool group) have their downlink feedback information.

The expression of the feedback information may be the ACK or NACK described above, which may be represented by one bit. For example, "1" represents an ACK, and "0" represents a NACK. The expression of the feedback information may also be one of the four states described above, which may be represented by two bits. For example, "00" represents State 0, "01" represents State 1, "10" represents State 2, and "11" represents State 3. The expression of the feedback information may also be one of the eight states described above, which may be represented by three bits. For example, "000" represents State 0, "001" represents State 1, "010" represents State 2, "011" represents State 3, "100" represents State 4, "101" represents State 5, "110" represents State 6, and "111" represents State 7. Four states may also be taken out of the eight states, and one of the four states is represented by two bits.

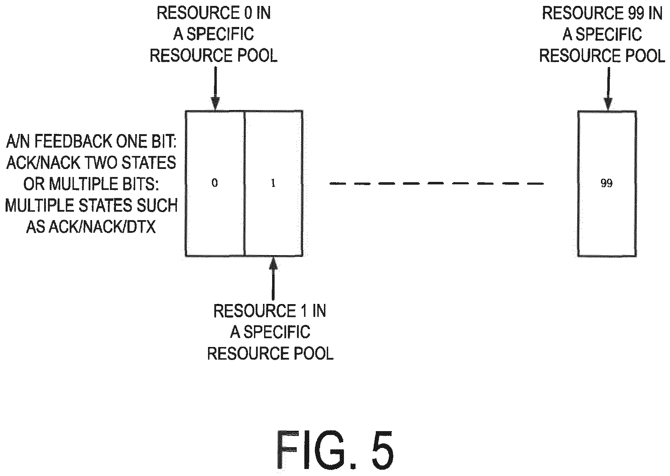

As shown in FIG. 5, a specific resource pool has a total of 100 resources from Resource No. 0 to Resource No. 99. Each resource in the resource pool has its corresponding feedback information in a physical downlink channel corresponding to the resource pool. Feedback information corresponding to a specific resource in a data packet of the physical downlink channel will be searched for at a corresponding position in the data packet according to a resource number of the resource. For example, if feedback information for each resource is 1 bit, the first bit in the data packet is feedback information for Resource No. "0," the second bit is feedback information for Resource No. "1,"..., and the 100th bit is feedback information for Resource No. "99." If feedback information for each resource is 2 bits, the first and second bits in the data packet are feedback information for Resource No. "0," the third and fourth bits are feedback information for Resource No. "1,"..., and the 199th and 200th bits are feedback information for Resource No. "99." After transmitting uplink data, UE will resolve a data packet of downlink feedback information for an uplink resource pool in a physical downlink channel corresponding to a resource pool for the UE, and retrieve feedback information at a corresponding position in the data packet according to a number of a resource used by the UE for transmitting the uplink data.

### Mode 2

The base station provides feedback information only for a resource in the uplink transmission resource pool that correctly receives uplink data, and indicates a correspondence between the feedback information and the resource in the uplink data transmission resource pool by including a number of the resource in a data packet carrying the feedback information. In other words, downlink feedback information exists only when the base station correctly resolves a resource (or resource group) in the uplink information resource pool (or resource pool group).

In the situation that the UE sends only user data on an uplink, downlink feedback information for the UE includes an ACK. That is, if the base station correctly receives the uplink data of the UE, an ACK and a corresponding resource number are fed back; if the uplink data is not received or is received incorrectly, an ACK is not fed back. Alternatively, only a NACK may be fed back. That is, if the base station does not receive the uplink data or receives the uplink data incorrectly, a NACK and a corresponding resource number are fed back.

In the situation that the UE sends preamble signals and user data on an uplink, only when the base station correctly resolves the preamble signals, the uplink data, or the preamble signals and the uplink data on a specific resource group (or resource), will feedback information corresponding to a number of the resource group (or number of the resource) and the resource group number (or resource number) be fed back. That is, feedback information exists for the States 1, 2, and 3 in Table 1 above. That is to say, when the base station resolves only uplink data of a specific uplink resource group (or resource), State 1 in Table 1 and a corresponding resource group number (or resource number) are fed back; when the base station resolves only preamble signals of a specific uplink resource group (or resource), State 2 in Table 1 and a corresponding resource group number (or resource number) are fed back; when the base station resolves preamble signals and data of a specific uplink resource group (or resource), State 3 in Table 1 and a corresponding resource group number (or resource number) are fed back. Alternatively, only a state of resolving user data by the base station and a corresponding resource group number (or resource number) may be fed back. Alternatively, only a state of resolving preamble signals and user data by the base station and a corresponding resource group number (or resource number) may be fed back. In addition, feedback of only a specific one of other states or a combination of some of other states and a corresponding resource group number (or resource number) is not excluded.

In the situation that the UE sends preamble signals, uplink control signaling, and user data on an uplink, only when the base station correctly resolves at least one of the preamble signals, the uplink control signaling, and the uplink data on a specific resource group (or resource), will feedback information corresponding to a number of the resource group (or number of the resource) and the resource group number (or resource number) be fed back. That is, feedback information exists for the States 1, 2, 3, 4, 5, 6, and 7 in Table 2 above. That is to say, when the base station resolves only uplink data of a specific uplink resource group (or resource), State 1 in Table 2 and a corresponding resource group number (or resource number) are fed back; when the base station resolves only uplink control signaling of a specific uplink resource group (or resource), State 2 in Table 2 and a corresponding resource group number (or resource number) are fed back;...; when the base station resolves preamble signals, uplink control signaling, and data of a specific uplink resource group (or resource), State 7 in Table 2 and a corresponding resource group number (or resource number) are fed back. Alternatively, only a state of resolving user data by the base station and a corresponding resource group number (or resource number) may be fed back. Alternatively, only a state of resolving preamble signals and user data by the base station and a corresponding resource group number (or resource number) may be fed back. Alternatively, only a state of resolving user data by the base station and a corresponding resource group number (or resource number) may be fed back. Alternatively, only a state of resolving preamble signals, uplink control signaling, and user data by the base station and a corresponding resource group number (or resource number) may be fed back. In addition, feedback of only a specific one of other states or a combination of some of other states and a corresponding resource group number (or resource number) is not excluded.

The expression of the feedback information may be the ACK or NACK described above, which may be represented by one bit. For example, "1" represents an ACK, and "0" represents a NACK. The expression of the feedback information may also be one or more of the four states described above, which may be represented by one or two bits. For example, "00" represents State 0, "01" represents State 1, "10" represents State 2, and "11" represents State 3. The expression of the feedback information may also be one or more of the eight states described above, which may be represented by one or two or three bits. For example, the feedback information may be represented by three bits for seven of the eight states. "001" represents State 1, "010" represents State 2, "011" represents State 3, "100" represents State 4, "101" represents State 5, "110" represents State 6, and "111" represents State 7. Four states may also be taken out of the eight states, and one of the four states is represented by two bits. Only State 7 of the eight states may be fed back, which needs to be represented by only one bit. Other situations will not be illustrated one by one.

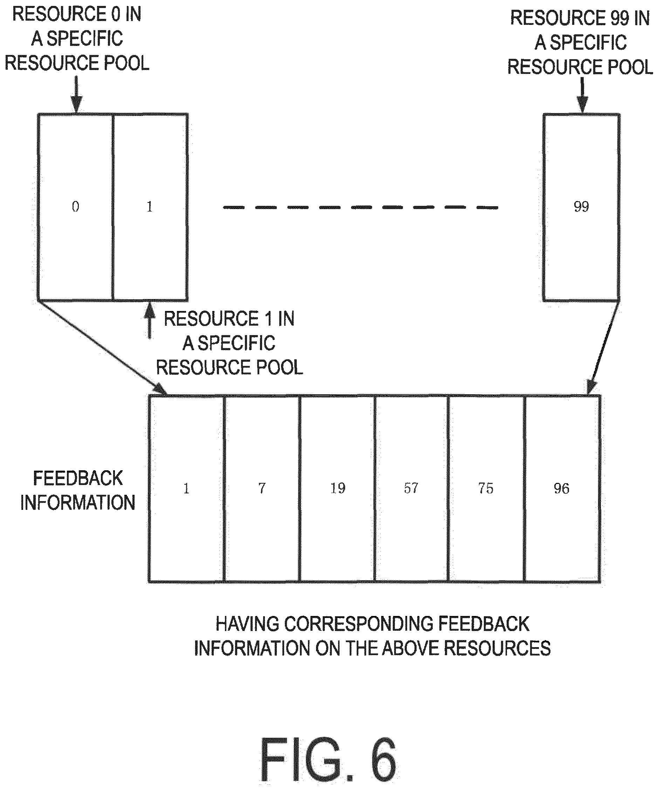

As shown in FIG. 6, a specific resource pool (or resource pool group) has a total of 100 resources (or resource groups) from Resource No. 0 to Resource No. 99. In the 100 resources (or resource groups) in the resource pool (or resource pool group), the base station correctly receives preamble signals or uplink control signaling or uplink data sent by a user only on resources (or resource groups) having resource numbers (or resource group numbers) of 1, 7, 19, 57, 75, and 96. In this case, only the aforementioned resources (or resource groups) have their corresponding feedback information in a physical downlink channel corresponding to the resource pool (or resource pool group). Feedback information corresponding to a specific resource (or resource group) in a data packet of the physical downlink channel will include a resource number (or resource group number) and corresponding state feedback information. After transmitting uplink data, UE will receive, on a physical downlink channel resource corresponding to a resource pool (or resource pool group) for transmitting the uplink data (or uplink information), downlink feedback information for the resource pool (or resource pool group). The UE searches, in a downlink data packet resolved by the UE, whether a resource number (or resource group number) used by the user for transmitting the uplink data (or uplink information) exists, and if yes, the UE retrieves state feedback information corresponding to the resource number (or resource group number). In a downlink feedback data packet, data may be arranged as resource numbers (or resource group numbers) plus state feedback information bits (one or two or three bits); or all resource numbers (or resource group numbers) required to be fed back are first arranged, and all state feedback information bits corresponding to all the fed back resource numbers (or resource group numbers) are then arranged. A specific resource number (or resource group number) has corresponding state feedback information of one or two or three bits. In addition, resource numbers (or resource group numbers) required to be fed back and state feedback information corresponding thereto may be fed back in other orders.

The aforementioned information may be fed back in the form of control signaling on a physical downlink control channel, may be fed back in the form of a media access control (MAC) message on a physical downlink shared channel, or may be fed back in the form of RRC signaling on a physical downlink shared channel. The physical downlink control channel may be a physical channel defined in the NR standards for carrying control signaling, while the physical downlink shared channel may be a physical channel defined in the NR standards for carrying high-level signaling and/or data.

The aforementioned physical downlink control channel carrying downlink feedback information may not schedule downlink data. That is, only a pure physical downlink channel exists, and a physical downlink shared channel scheduled by the physical downlink channel does not exist.

The aforementioned physical downlink shared channel carrying downlink feedback information may or may not have corresponding scheduling information. That is, a physical downlink control channel may be used to schedule a physical downlink shared channel carrying downlink feedback information, or a physical downlink control channel may not be used to schedule a physical downlink shared channel carrying downlink feedback information.

The aforementioned physical downlink control channel and/or physical downlink shared channel carrying downlink feedback information may be sent multiple times repeatedly, or may be sent one time. Which method to use will depend on a coverage enhancement level of the physical downlink channel.

The above embodiments may be implemented separately, or some of the embodiments may be implemented in combination.

The methods and related devices according to the present application have been described above in conjunction with preferred embodiments. It should be understood by those skilled in the art that the methods shown above are only exemplary. The method according to the present application is not limited to steps or sequences shown above. The base station and user equipment shown above may include more modules. For example, the base station and user equipment may further include modules that can be developed or developed in the future to be applied to a base station or UE, and the like. Various identifiers shown above are only exemplary, not for limitation. The present application is not limited to specific information elements serving as examples of these identifiers. Those skilled in the art can make various alterations and modifications according to the teachings of the illustrated embodiments.

It should be understood that the above-described embodiments of the present application may be implemented through software, hardware, or a combination of software and hardware. For example, various components of the base station and user equipment in the above embodiments can be implemented through multiple devices. These devices include, but are not limited to: an analog circuit device, a digital circuit device, a digital signal processing (DSP) circuit, a programmable processor, an application specific integrated circuit (ASIC), a field programmable gate array (FPGA), and a programmable logic device (CPLD), and the like.

In the present application, the "base station" refers to a mobile communication data and control switching center with large transmit power and wide coverage area, including resource allocation and scheduling, data reception and transmission, and other functions. The term "user equipment" refers to a user mobile terminal, such as a terminal device that can perform wireless communication with a base station or a micro base station, including a mobile phone, a notebook, or the like.

In addition, the embodiments of the present application disclosed herein may be implemented on a computer program product. More specifically, the computer program product is a product provided with a computer-readable medium having computer program logic encoded thereon. The computer program logic, when executed on a computing device, provides related operations to implement the above-described technical solutions of the present application. The computer program logic, when executed on at least one processor of a computing system, causes the processor to perform the operations (methods) described in the embodiments of the present application. Such an arrangement of the present application is typically provided as software, code, and/or other data structures that are configured or encoded on a computer-readable medium, such as an optical medium (for example, a CD-ROM), a floppy disk, or a hard disk, or other media such as firmware or microcode on one or more ROM or RAM or PROM chips, or downloadable software images, shared databases and so on in one or more modules. Software or firmware or such configuration may be installed on a computing device such that one or more processors in the computing device perform the technical solutions described in the embodiments of the present application.

In addition, each functional module or each feature of the base station device and the terminal device used in each of the above embodiments may be implemented or executed by a circuit, which is usually one or more integrated circuits. Circuits designed to execute various functions described in this description may include general-purpose processors, digital signal processors (DSPs), application specific integrated circuits (ASICs) or general-purpose integrated circuits, field programmable gate arrays (FPGAs) or other programmable logic devices, discrete gates or transistor logic, or discrete hardware components, or any combination of the above. The general-purpose processor may be a microprocessor; or the processor may be an existing processor, a controller, a microcontroller, or a state machine. The above-mentioned general-purpose processor or each circuit may be configured with a digital circuit or may be configured with a logic circuit. In addition, when an advanced technology that can replace current integrated circuits emerges because of the advances in semiconductor technology, the present application may also use integrated circuits obtained using this advanced technology.

Although the present application has been shown in connection with the preferred embodiments of the present application, it will be understood by those skilled in the art that various modifications, substitutions and alterations can be made to the present application without departing from the spirit and scope of the present application. Accordingly, the present application should not be defined by the above-described embodiments, but should be defined by the appended claims and their equivalents.

The program running on the device according to the present invention may be a program that enables the computer to implement the functions of the embodiments of the present invention by controlling the central processing unit (CPU). The program or information processed by the program may be stored temporarily in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions can be achieved by reading programs recorded on the recording medium and executing them by the computer system. The so-called "computer system" herein may be a computer system embedded in the device, which may include operating systems or hardware (for example, peripherals). The "computer-readable recording medium" may be a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed through circuits (for example, monolithic or multi-chip integrated circuits). Circuits designed to execute the functions described in this description may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, a controller, a microcontroller, or a state machine. The circuit may be a digital circuit or an analog circuit. When new integrated circuit technologies that replace existing integrated circuits emerge because of the advances in semiconductor technology, the present invention may also be implemented using these new integrated circuit technologies.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulted from the appropriate combinations of the technical means disclosed in different embodiments are also included within the technical scope of the present invention. In addition, components with the same effect described in the above embodiments may be replaced with one another.

## Claims

1. A base station, comprising:
a configuration unit, adapted to configure an uplink transmission resource pool for unlicensed uplink data transmission, and configure a downlink feedback resource for carrying downlink feedback information corresponding to the uplink transmission resource pool; and
a transmission unit, adapted to send configuration information, the configuration information indicating the uplink transmission resource pool and the downlink feedback resource.

2. The base station according to claim 1, wherein the downlink feedback resource refers to a downlink frequency domain resource and/or time domain resource and/or code domain resource and/or spatial domain resource.

3. The base station according to claim 1, wherein the configuring an uplink transmission resource pool for unlicensed uplink data transmission comprises one of the following:
configuring different uplink transmission resource pools for user equipment of different coverage enhancement levels;
configuring the same uplink transmission resource pool for user equipment of different coverage enhancement levels; and
configuring the same uplink transmission resource pool for user equipment of some different coverage enhancement levels.

4. The base station according to any one of claims 1 to 3, wherein the configuring a downlink feedback resource for carrying downlink feedback information corresponding to the uplink transmission resource pool comprises one of the following:
configuring different downlink feedback resources for different uplink transmission resource pools;
configuring the same downlink feedback resource for different uplink transmission resource pools; and
configuring the same downlink feedback resource for some different uplink transmission resource pools.

5. The base station according to claim 1, further comprising a receiving unit, wherein
the receiving unit is adapted to receive unlicensed uplink transmission from user equipment according to the configured uplink transmission resource pool; and
the transmission unit is further adapted to send downlink feedback information for the unlicensed uplink transmission using the configured downlink feedback resource.

6. The base station according to claim 5, wherein the downlink feedback information is expressed for a single resource in the uplink transmission resource pool.

7. The base station according to claim 5, wherein the base station provides feedback information for each resource in the uplink transmission resource pool, and a position of the feedback information corresponding to each resource in a data packet carrying the feedback information has a predetermined mapping to a number of the resource.

8. The base station according to claim 5, wherein the base station provides feedback information only for a resource in the uplink transmission resource pool that correctly receives uplink data, and indicates a correspondence between the feedback information and the resource in the uplink data transmission resource pool by comprising a number of the resource in a data packet carrying the feedback information.

9. The base station according to claim 5, wherein downlink feedback information for user equipment having the same coverage enhancement level is fed back in the same physical downlink channel, and the physical downlink channel is sent multiple times repeatedly or sent one time.

10. The base station according to claim 5, wherein the downlink feedback information is carried by one of the following: control information on a physical downlink control channel; a media access control (MAC) message on a physical downlink shared channel; and RRC information on a physical downlink shared channel.

11. A method performed by a base station, comprising:
configuring an uplink transmission resource pool for unlicensed uplink data transmission, and configuring a downlink feedback resource for carrying downlink feedback information corresponding to the uplink transmission resource pool; and
sending configuration information, the configuration information indicating the uplink transmission resource pool and the downlink feedback resource.

12. The base station according to claim 11, wherein the downlink feedback resource refers to a downlink frequency domain resource and/or time domain resource and/or code domain resource and/or spatial domain resource.

13. The method according to claim 11, wherein the configuring an uplink transmission resource pool for unlicensed uplink data transmission comprises one of the following:
configuring different uplink transmission resource pools for user equipment of different coverage enhancement levels;
configuring the same uplink transmission resource pool for user equipment of different coverage enhancement levels; and
configuring the same uplink transmission resource pool for user equipment of some different coverage enhancement levels.

14. The method according to any one of claims 11 to 13, wherein the configuring a downlink feedback resource for carrying downlink feedback information corresponding to the uplink transmission resource pool comprises one of the following:
configuring different downlink feedback resources for different uplink transmission resource pools;
configuring the same downlink feedback resource for different uplink transmission resource pools; and
configuring the same downlink feedback resource for some different uplink transmission resource pools.

15. The method according to claim 11, further comprising:
receiving unlicensed uplink transmission from user equipment according to the configured uplink transmission resource pool; and
transmitting downlink feedback information for the unlicensed uplink transmission using the configured downlink feedback resource.

16. The method according to claim 15, wherein the downlink feedback information is expressed for a single resource in the uplink transmission resource pool.

17. The method according to claim 15, wherein the transmission downlink feedback information for the unlicensed uplink transmission using the configured downlink feedback resource comprises:
the base station providing feedback information for each resource in the uplink transmission resource pool, and a position of the feedback information corresponding to each resource in a data packet carrying the feedback information having a predetermined mapping to a number of the resource.

18. The method according to claim 15, wherein the transmission downlink feedback information for the unlicensed uplink transmission using the configured downlink feedback resource comprises:
the base station providing feedback information only for a resource in the uplink transmission resource pool that correctly receives uplink data, and indicating a correspondence between the feedback information and the resource in the uplink data transmission resource pool by comprising a number of the resource in a data packet carrying the feedback information.

19. The method according to claim 15, wherein the transmission downlink feedback information for the unlicensed uplink transmission using the configured downlink feedback resource comprises:
downlink feedback information for user equipment having the same coverage enhancement level being fed back in the same physical downlink channel, and the physical downlink channel being sent multiple times repeatedly or sent one time.

20. The method according to claim 15, wherein the downlink feedback information is carried by one of the following: control information on a physical downlink control channel; a media access control (MAC) message on a physical downlink shared channel; and RRC information on a physical downlink shared channel.

21. User equipment (UE), comprising:
a receiving unit, adapted to receive configuration information from a base station; and
a processing unit, adapted to extract, from the configuration information, an uplink transmission resource pool configured for unlicensed uplink data transmission and a downlink feedback resource configured for carrying downlink feedback information corresponding to the uplink transmission resource pool.

22. The UE according to claim 21, wherein the downlink feedback resource refers to a downlink frequency domain resource and/or time domain resource and/or code domain resource and/or spatial domain resource.

23. The UE according to claim 21, wherein the uplink transmission resource pool configured for unlicensed uplink data transmission comprises one of the following:
different uplink transmission resource pools configured for user equipment of different coverage enhancement levels;
the same uplink transmission resource pool configured for user equipment of different coverage enhancement levels; and
the same uplink transmission resource pool configured for user equipment of some different coverage enhancement levels.

24. The UE according to any one of claims 21 to 23, wherein the downlink feedback resource configured for carrying the downlink feedback information corresponding to the uplink transmission resource pool comprises one of the following:
different downlink feedback resources configured for different uplink transmission resource pools;
the same downlink feedback resource configured for different uplink transmission resource pools; and
the same downlink feedback resource configured for some different uplink transmission resource pools.

25. The UE according to claim 21, further comprising a transmission unit, wherein
the transmission unit is adapted to perform uplink data transmission using a resource in the configured uplink transmission resource pool;
the receiving unit is further adapted to receive downlink feedback information from the base station for the uplink data transmission; and
the transmission unit is further adapted to perform uplink data retransmission according to the received downlink feedback information.

26. The UE according to claim 25, further comprising a measurement unit, wherein
the measurement unit is adapted to perform reference signal received power (RSRP) measurement; and
the sending unit is further adapted to: select an appropriate uplink transmission resource pool from the configured uplink transmission resource pools according to a measured RSRP value; and select a resource from the appropriate uplink transmission resource pool for performing uplink data transmission.

27. The UE according to claim 25, wherein the downlink feedback information is expressed for a single resource in the uplink transmission resource pool.

28. The UE according to claim 25, wherein the base station provides feedback information for each resource in the uplink transmission resource pool, and a position of the feedback information corresponding to each resource in a data packet carrying the feedback information has a predetermined mapping to a number of the resource.

29. The UE according to claim 25, wherein the base station provides feedback information only for a resource in the uplink transmission resource pool that correctly receives uplink data, and indicates a correspondence between the feedback information and the resource in the uplink data transmission resource pool by comprising a number of the resource in a data packet carrying the feedback information.

30. The UE according to claim 25, wherein the downlink feedback information is carried by one of the following: control information on a physical downlink control channel; a media access control (MAC) message on a physical downlink shared channel; and RRC information on a physical downlink shared channel.

31. A method performed by user equipment (UE), comprising:
receiving configuration information from a base station; and
extracting, from the configuration information, an uplink transmission resource pool configured for unlicensed uplink data transmission and a downlink feedback resource configured for carrying downlink feedback information corresponding to the uplink transmission resource pool.

32. The method according to claim 31, wherein the downlink feedback resource refers to a downlink frequency domain resource and/or time domain resource and/or code domain resource and/or spatial domain resource.

33. The method according to claim 31, wherein the uplink transmission resource pool configured for unlicensed uplink data transmission comprises one of the following:
different uplink transmission resource pools configured for user equipment of different coverage enhancement levels;
the same uplink transmission resource pool configured for user equipment of different coverage enhancement levels; and
the same uplink transmission resource pool configured for user equipment of some different coverage enhancement levels.

34. The method according to any one of claims 31 to 33, wherein the downlink feedback resource configured for carrying the downlink feedback information corresponding to the uplink transmission resource pool comprises one of the following:
different downlink feedback resources configured for different uplink transmission resource pools;
the same downlink feedback resource configured for different uplink transmission resource pools; and
the same downlink feedback resource configured for some different uplink transmission resource pools.

35. The method according to claim 31, further comprising:
performing uplink data transmission using a resource in the configured uplink transmission resource pool;
receiving downlink feedback information from the base station for the uplink data transmission; and
performing uplink data retransmission according to the received downlink feedback information.

36. The method according to claim 35, further comprising:
performing reference signal received power (RSRP) measurement,
wherein
the performing uplink data transmission using a resource in the configured uplink transmission resource pool comprises:
selecting an appropriate uplink transmission resource pool from the configured uplink transmission resource pools according to a measured RSRP value; and selecting a resource from the appropriate uplink transmission resource pool for performing uplink data transmission.

37. The method according to claim 35, wherein the downlink feedback information is expressed for a single resource in the uplink transmission resource pool.

38. The method according to claim 35, wherein the base station provides feedback information for each resource in the uplink transmission resource pool, and a position of the feedback information corresponding to each resource in a data packet carrying the feedback information has a predetermined mapping to a number of the resource.

39. The method according to claim 35, wherein the base station provides feedback information only for a resource in the uplink transmission resource pool that correctly receives uplink data, and indicates a correspondence between the feedback information and the resource in the uplink data transmission resource pool by comprising a number of the resource in a data packet carrying the feedback information.

40. The method according to claim 35, wherein the downlink feedback information is carried by one of the following: control information on a physical downlink control channel; a media access control (MAC) message on a physical downlink shared channel; and RRC information on a physical downlink shared channel.
